# EUROPÄISCHE PATENTSCHRIFT

(11) **EP 2 848 438 B1**
(45) Veröffentlichungstag und Bekanntmachung des Hinweises auf die Patenterteilung: **21.02.2018**
(21) Anmeldenummer: 14177950.4
(22) Anmeldetag: 22.07.2014
(51) Int. Cl.: B60G 17/04, F02B 21/00

(54) **Luftfederungsvorrichtung für ein Fahrzeug mit einem Verbrennungsmotor**
Air suspension device for a vehicle with a combustion engine
Dispositif de ressort pneumatique pour un véhicule doté d'un moteur à combustion interne

(30) Priorität: 12.08.2013 DE 102013215851
(43) Veröffentlichungstag der Anmeldung: 18.03.2015
(73) Patentinhaber: Bayerische Motoren Werke Aktiengesellschaft, 80809 München (DE)
(72) Erfinder: Dr.Dönitz, Christian, 85716 Unterschleißheim (DE)

(56) Entgegenhaltungen:
- WO-A1-2011/015336
- WO-A1-2011/044555
- CH-A- 363 248
- DE-A1-102004 047 975
- DE-A1-102012 219 432
- DE-T2-602005 002 267
- GB-A- 2 485 176

## Beschreibung

Die Erfindung betrifft eine Luftfederungsvorrichtung für ein Fahrzeug mit einem Verbrennungsmotor.

Bei der Pkw-Luftfederung, die insbesondere bei Oberklasse-Fahrzeugen eingesetzt wird, wird die Gegenkraft zu den fahrdynamischen Kräften am jeweiligen Rad oder der Achse mithilfe von Druckluft erzeugt. Über Niveauregelungsventile lässt sich der Druck in den Luftfedern des Fahrzeugs einstellen. Insbesondere soll dadurch der Fahrkomfort erhöht werden. Damit immer ausreichend Druckluft zur Verfügung steht, ist ein Drucklufttank vorgesehen, der üblicherweise von einem Kompressor befüllt wird.

Der Nachteil von verstellbaren Druckluftfederungen für Pkws liegt darin, dass ein teurer Kompressor benötigt wird, der das Fahrzeuggewicht erhöht und zusätzlichen Bauraum in Anspruch nimmt. Auch der benötigte Drucklufttank hat eine signifikante Größe. Es ist bekannt, bei Nutzfahrzeugen und Bussen, die mit einer Luftfederung ausgestattet sind, die notwendige Druckluft aus deren Druckluftbremsanlage abzuzweigen. Dies ist bei Pkws nicht möglich, da deren Bremsen in der Regel nicht pneumatisch, sondern hydraulisch betätigt werden.

In einem völlig anderen Zusammenhang werden derzeit verstärkt Systeme entwickelt, bei denen ein Verbrennungsmotor mit Luft aus einem separaten Drucklufttank aufgeladen werden kann. Der Anschluss eines Drucklufttanks direkt an die Brennkammern der Zylinder eines Verbrennungsmotors mittels zusätzlicher Ladeventile ist beispielsweise aus der WO 2009/036992 A1 und der WO 2011/015336 A1 bekannt. Des Weiteren wird auf den Artikel "Das Downsizing-Boost-Konzept auf Basis der pneumatischen Hybridisierung von Ottomotoren" von L. Guzella et al. in der MTZ Motortechnische Zeitschrift, Ausgabe 01/2010, Seiten 52 bis 58 verwiesen. Ein hubvariabler Ventiltrieb für einen Zylinderkopf einer Brennkraftmaschine, der für die Betätigung von Ladeventilen für Druckluft aus einem Drucklufttank geeignet ist, ist in der deutschen Patentanmeldung DE 10 2012 212 048.3 beschrieben.

Aus der DE 10 2005 039 556 A1 ist eine Vorrichtung mit den Merkmalen des Oberbegriffs des Anspruchs 1 bekannt. Zur Vermeidung eines Kompressors zur Druckluftversorgung wird von einem Konzept ausgegangen, welches darauf beruht, dass viele Nutzfahrzeugmotoren als Teil der Motorbremse Konstantdrossel- oder Dekompressionsventile besitzen, die die im Verdichtungstakt verdichtete Luft ins Abgassystem entlüften. Während dieser Entlüftung wird kein Kraftstoff in die Zylinder eingespritzt. Bei diesen Motoren handelt es sich vielfach um sehr hochverdichtende Direkteinspritzer-Dieselmotoren, die im Verdichtungstakt die angesaugte Luft auf im Vergleich zum pneumatischen System sehr hohe Drücke verdichten. Ein Teil dieses Druckes wird über die Dekompressionsventile in Druckspeicher der Pneumatikanlage geleitet. Die Vorrichtung umfasst ein Dekompressionsventil und eine als Weiche ausgebildete Ventileinrichtung, die wahlweise eine Leitung zu einem Abgassystem oder zu einer Druckluftversorgungseinrichtung des Nutzfahrzeugs freigeben kann. Eine an der Leitung zur Druckluftversorgungseinrichtung hinter einem Rückschlagventil angeschlossene Luftaufbereitungsanlage kann mehrere Druckluftbehälter, für verschiedene Druckluftverbraucher im Nutzfahrzeug mit Druckluft beliefern.

Die CH 363248 A zeigt eine Druckluftbremse, bei der eine Abhängigkeit der Bremsung von dem in der Luftfederung herrschenden Druck besteht. Als lastabhängiger Steuerwert für den Bremsdruck soll ein jeweiliger mittlerer Wert der in den an einer Fahrzeugachse verteilten Luftfedern herrschenden Drücke gebildet werden.

Aufgabe der Erfindung ist es, insbesondere für Pkws ein platzsparendes und effizientes Luftfederungssystem zu schaffen.

Gelöst wird diese Aufgabe durch eine Luftfederungsvorrichtung mit den Merkmalen des Anspruchs 1. Vorteilhafte und zweckmäßige Ausgestaltungen der erfindungsgemäßen Luftfederungsvorrichtung sind in den Unteransprüchen angegeben.

Die erfindungsgemäße Luftfederungsvorrichtung für ein Fahrzeug mit einem Verbrennungsmotor umfasst einen ersten Drucklufttank, der so an den Verbrennungsmotor des Fahrzeugs angeschlossen ist, dass der Verbrennungsmotor Druckluft in den ersten Drucklufttank schieben kann, Luftfedern zur Federung des Fahrzeugs, einen zweiten Drucklufttank, der an die Luftfedern angeschlossen ist, und eine Druckluftleitung, die den ersten Drucklufttank mit dem zweiten Drucklufttank verbindet.

Die Erfindung beruht auf der Erkenntnis, dass der Verbrennungsmotor problemlos mehr Druckluft erzeugen kann, als für die Speicherung und den späteren Abruf aus dem ersten Drucklufttank benötigt wird. Somit kann die im ersten Drucklufttank gespeicherte Druckluft für die Befüllung des zweiten Drucklufttanks, der für die Luftfederung benötigt wird, verwendet werden. Dies ist möglich, weil das Druckniveau in den beiden Tanks ähnlich ist (Drucklufttank für Verbrennungsmotor: ca. 8 bis 15 bar; Drucklufttank für Luftfederung: ca. 5 bis 15 bar). Ein ansonsten üblicher Kompressor zum Befüllen des Drucklufttanks für die Luftfederung kann somit entfallen, was das Luftfederungssystem kostengünstiger und aufgrund des nicht benötigten Kompressors deutlich platzsparender macht. Außerdem kann der Drucklufttank für die Luftfederung kleiner als sonst ausfallen, da in Form des Drucklufttanks für den Verbrennungsmotor bereits ein Puffer zur Verfügung steht.

Gemäß der Erfindung ist in der Druckluftleitung eine Schalteinrichtung angeordnet, von der eine weitere Druckluftleitung zu den Luftfedern führt. Die Schalteinrichtung ermöglicht vorteilhaft die Nutzung verschiedener Strömungsverbindungen, sodass die Flexibilität des Luftfederungssystems erhöht wird.

Um den Luftstrom vom ersten Drucklufttank zum zweiten Drucklufttank kontrollieren zu können, sollte in der verbindenden Druckluftleitung ein schaltbares oder regelbares Ventil angeordnet sein. So kann der zweite Drucklufttank bei Bedarf durch Öffnen des Ventils befüllt werden. Durch Schließen des Ventils kann der Druck im Drucklufttank für die Luftfederung auf ein Vorzugsniveau eingestellt werden, d. h. er ist nicht den erheblichen Druckschwankungen des Drucklufttanks für den Verbrennungsmotor ausgesetzt. Eine gezielte Einstellung des Luftstroms zwischen den beiden Drucklufttanks kann durch ein regelbares Ventil erreicht werden.

Für die Luftfederung wird trockene Luft benötigt, da ansonsten die Luftfedern Schaden nehmen können. Deshalb ist in der Druckluftleitung vorzugsweise eine Lufttrocknungseinheit angeordnet.

Um sicherzugehen, dass keine Verunreinigungen zu den Luftfedern gelangen, kann in der Druckluftleitung ein Luftfilter angeordnet sein.

Die erfindungsgemäß vorgesehene Schalteinrichtung kann gemäß einem ersten Aspekt so ausgelegt sein, dass sie wahlweise eine Strömungsverbindung zwischen dem ersten Drucklufttank und dem zweiten Drucklufttank oder eine Strömungsverbindung zwischen dem zweiten Drucklufttank und den Luftfedern herstellen kann. Mit anderen Worten kann mit der Schaltbox so zwischen einem Füllbetrieb zum Befüllen des zweiten Drucklufttanks durch den ersten Drucklufttank und einer "normalen" Speisung der Luftfedern aus dem zweiten Drucklufttank umgeschaltet werden.

Andererseits kann die Schalteinrichtung gemäß einem zweiten Aspekt so ausgelegt sein, dass sie wahlweise eine Strömungsverbindung zwischen dem ersten Drucklufttank und dem zweiten Drucklufttank oder eine Strömungsverbindung zwischen dem ersten Drucklufttank und den Luftfedern herstellen kann. In diesem Fall erlaubt die Schaltbox ein Umschalten zwischen dem Füllbetrieb und einer Speisung der Luftfedern aus dem ersten Drucklufttank, was aber nur eine Notversorgung darstellt, etwa wenn der zweite Drucklufttank nicht genügend Druck bereitstellen kann.

Vorzugsweise erlaubt die Schaltbox eine Kombination der beiden Aspekte, sodass insgesamt zwischen drei Modi gewechselt werden kann.

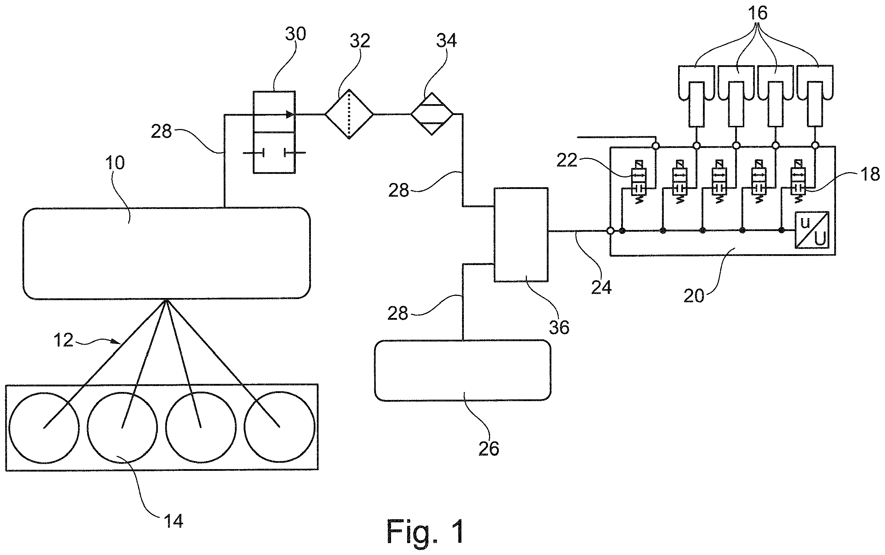

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur den schematischen Aufbau eines kombinierten Motor- und Federungssystems mit einer erfindungsgemäßen Luftfederungsvorrichtung.

In der Figur ist symbolisch ein aufgeladener Hubkolbenmotor mit einem Druckluftventilsystem dargestellt. Ein erster Drucklufttank 10 ist über Druckluftleitungen 12 und steuerbare Ladeventile direkt mit den Brennkammern der Zylinder 14 des Motors verbunden. Je nach Betriebsart des Motors strömt Druckluft aus dem ersten Drucklufttank 10 in die Brennkammern bestimmter Zylinder 14, um deren Kolben anzutreiben, und/oder die Kolben bestimmter Zylinder 14 fördern Luft aus der Brennkammer in den ersten Drucklufttank 10, um diesen aufzufüllen.

Des Weiteren zeigt die Figur ein Luftfederungssystem für das Fahrzeug mit mehreren Luftfedern 16, die jeweils über ein Niveauregulierungsventil 18 mit Druckluft versorgt werden. Bei den Niveauregulierungsventilen 18 handelt es sich um Magnetventile, die in einem gemeinsamen Ventilblock 20 angeordnet sind. Im Ventilblock 20 befindet sich zudem ein Auslassventil 22, das an dieselbe Druckluftleitung 24 angeschlossen ist wie die Niveauregulierungsventile 18. Eine Anordnung der Niveauregulierungsventile 18 in einem Ventilblock ist aber nicht zwingend notwendig.

Gespeist werden die Luftfedern 16 über die Druckluftleitung 24 von einem eigenen zweiten Drucklufttank 26. Der zweite Drucklufttank 26 ist jedoch nicht an einen Kompressor abgeschlossen. Vielmehr erhält der zweite Drucklufttank 26 die benötigte Druckluft aus dem ersten Drucklufttank 10, wie nachfolgend genauer erläutert wird.

Der erste Drucklufttank 10 und der zweite Drucklufttank 26, der kleiner als der erste Drucklufttank 10 ausgelegt ist, sind über eine Druckluftleitung 28 miteinander verbunden, in der ein schaltbares Ventil 30 angeordnet ist. Bei Bedarf kann somit durch Öffnen des Ventils 30 Druckluft aus dem ersten Drucklufttank 10 in den zweiten Drucklufttank 26 gefördert werden. Gegebenenfalls sorgen eine Lufttrocknungseinheit 32 und ein Luftfilter 34, die ebenfalls in der Druckluftleitung 28 angeordnet sind, dafür, dass die für die Luftfederung bestimmte Luft entsprechend der Anforderungen trocken und nicht durch Partikel verunreinigt ist.

Die verschiedenen Modi, in denen der Verbrennungsmotor mit dem angeschlossenen ersten Drucklufttank 10 betrieben werden kann, sind aus dem eingangs genannten Stand der Technik grundsätzlich bekannt, sodass hier nicht im Detail darauf eingegangen werden muss. Entscheidend ist, dass bezüglich der Befüllung des ersten Drucktanks 10 durch den Verbrennungsmotor normalerweise ein Drucküberschuss vorliegt, da der Verbrennungsmotor in jeder Schubphase als Kompressor verwendet werden kann. Somit bestehen genügend Gelegenheiten, den zweiten Drucklufttank 26 aufzufüllen. Der Verbrennungsmotor kann auch mit Ventilen ausgestattet sein, die ermöglichen, dass z. B. zwei Zylinder Kraftstoff verbrennen, während zwei Zylinder pumpen.

In der Figur ist ein besonderer Systemaufbau mit einer Schalteinrichtung 36 dargestellt, die einerseits in der die beiden Drucklufttanks 10 und 26 verbindenden Druckluftleitung 28 und andererseits in der den zweiten Drucklufttank 26 mit dem Ventilblock 20 verbindenden Druckluftleitung 28, 24 angeordnet ist. Die Schalteinrichtung 36 ermöglicht folgende Strömungsverbindungen, zwischen denen mit einer Steuerung je nach Bedarf gewechselt werden kann:
1) vom ersten Drucklufttank 10 zum zweiten Drucklufttank 26 (Füllbetrieb);
2) vom zweiten Drucklufttank 26 zum Ventilblock 20 (normale Speisung der Luftfedern 16); und
3) vom ersten Drucklufttank 10 zum Ventilblock 20 (Notspeisung der Luftfedern 16).

Normalerweise wird nur zwischen den Betriebsmodi 1 und 2 gewechselt. Sollte jedoch der zweite Drucklufttank 26 nicht ausreichend befüllt oder defekt sein, kann hilfsweise der erste Drucklufttank 10 zur direkten Speisung der Luftfedern 16 herangezogen werden.

Anstelle des schaltbaren Ventils 30 kann auch ein regelbares Ventil 30 eingesetzt werden, das eine Dosierung der aus dem ersten Drucklufttank 10 zum Befüllen des zweiten Drucklufttanks 26 bzw. zum Speisen der Luftfedern 16 zur Verfügung gestellten Druckluft ermöglicht.

### Bezugszeichenliste

- 10: erster Drucklufttank
- 12: Druckluftleitungen
- 14: Zylinder
- 16: Luftfedern
- 18: Niveauregulierungsventile
- 20: Ventilblock
- 22: Auslassventil
- 24: Druckluftleitung
- 26: zweiter Drucklufttank
- 28: Druckluftleitung
- 30: Ventil
- 32: Lufttrocknungseinheit
- 34: Luftfilter
- 36: Schalteinrichtung

## Patentansprüche

1. Luftfederungsvorrichtung für ein Fahrzeug mit einem Verbrennungsmotor, umfassend
einen ersten Drucklufttank (10), der so an den Verbrennungsmotor des Fahrzeugs angeschlossen ist, dass der Verbrennungsmotor Druckluft in den ersten Drucklufttank (10) schieben kann,
Luftfedern (16) zur Federung des Fahrzeugs,
einen zweiten Drucklufttank (26), der an die Luftfedern (16) angeschlossen ist,
**dadurch gekennzeichnet, dass**
eine Druckluftleitung (28) den ersten Drucklufttank (10) mit dem zweiten Drucklufttank (26) verbindet, und
in der Druckluftleitung (28) eine Schalteinrichtung (36) angeordnet ist, von der eine weitere Druckluftleitung (24) zu den Luftfedern (16) führt.

2. Luftfederungsvorrichtung nach Anspruch 1, **dadurch gekennzeichnet, dass** in der Druckluftleitung (28) ein schaltbares oder regelbares Ventil (30) angeordnet ist.

3. Luftfederungsvorrichtung nach Anspruch 1 oder 2, **dadurch gekennzeichnet, dass** in der Druckluftleitung (28) eine Lufttrocknungseinheit (32) angeordnet ist.

4. Luftfederungsvorrichtung nach einem der vorhergehenden Ansprüche, **dadurch gekennzeichnet, dass** in der Druckluftleitung (28) ein Luftfilter (34) angeordnet ist.

5. Luftfederungsvorrichtung nach einem der vorhergehenden Ansprüche, **dadurch gekennzeichnet, dass** die Schalteinrichtung (36) so ausgelegt ist, dass sie wahlweise eine Strömungsverbindung zwischen dem ersten Drucklufttank (10) und dem zweiten Drucklufttank (26) oder eine Strömungsverbindung zwischen dem zweiten Drucklufttank (26) und den Luftfedern (16) herstellen kann.

6. Luftfederungsvorrichtung nach einem der vorhergehenden Ansprüche, **dadurch gekennzeichnet, dass** die Schalteinrichtung (36) so ausgelegt ist, dass sie wahlweise eine Strömungsverbindung zwischen dem ersten Drucklufttank (10) und dem zweiten Drucklufttank (26) oder eine Strömungsverbindung zwischen dem ersten Drucklufttank (10) und den Luftfedern (16) herstellen kann.

## Claims

1. An air suspension device for a vehicle having an internal combustion engine, comprising
a first compressed-air tank (10) which is connected to the internal combustion engine of the vehicle such that the internal combustion engine can push compressed air into the first compressed-air tank (10),
air springs (16) for suspending the vehicle,
a second compressed-air tank (26) which is connected to the air springs (16),
**characterised in that**
a compressed-air line (28) connects the first compressed-air tank (10) to the second compressed-air tank (26), and
a switching device (36) is arranged in the compressed-air line (28), from which a further compressed-air line (24) leads to the air springs (16).

2. An air suspension device according to Claim 1, **characterised in that** a switchable or regulable valve (30) is arranged in the compressed-air line (28).

3. An air suspension device according to Claim 1 or Claim 2, **characterised in that** a dehumidification unit (32) is arranged in the compressed-air line (28).

4. An air suspension device according to one of the preceding claims, **characterised in that** an air filter (34) is arranged in the compressed-air line (28).

5. An air suspension device according to one of the preceding claims, **characterised in that** the switching device (36) is designed such that it can produce either a flow connection between the first compressed-air tank (10) and the second compressed-air tank (26) or a flow connection between the second compressed-air tank (26) and the air springs (16).

6. An air suspension device according to one of the preceding claims, **characterised in that** the switching device (36) is designed such that it can produce either a flow connection between the first compressed-air tank (10) and the second compressed-air tank (26) or a flow connection between the first compressed-air tank (10) and the air springs (16).

## Revendications

1. Dispositif de suspension pneumatique d'un véhicule équipé d'un moteur à combustion interne comprenant :
un premier réservoir d'air comprimé (10), qui est connecté au moteur à combustion interne du véhicule de sorte que ce moteur à combustion interne puisse transférer de l'air comprimé dans le premier réservoir d'air comprimé (10),
des ressorts pneumatiques (16) de suspension du véhicule,
un second réservoir d'air comprimé (26), qui est connecté aux ressorts pneumatiques (16),
**caractérisé en ce qu'**
une conduite d'air comprimé (28) relie le premier réservoir d'air comprimé (10) au second réservoir d'air comprimé (26), et
dans la conduite d'air comprimé (28) est monté un dispositif de commutation (36) à partir duquel une autre conduite d'air comprimé (24) conduit aux ressorts pneumatiques (16).

2. Dispositif de suspension pneumatique conforme à la revendication 1,
**caractérisé en ce qu'**
une soupape commutable ou réglable (30) est montée dans la conduite d'air comprimé (28).

3. Dispositif de suspension pneumatique conforme à la revendication 1 ou 2,
**caractérisé en ce qu'**
une unité de séchage de l'air (32) est montée dans la conduite d'air comprimé (28).

4. Dispositif de suspension pneumatique conforme à l'une des revendications précédentes,
**caractérisé en ce qu'**
un filtre à air (34) est monté dans la conduite d'air comprimé (28).

5. Dispositif de suspension pneumatique conforme à l'une des revendications précédentes,
**caractérisé en ce que**
le dispositif de commutation (36) est réalisé de façon à permettre d'obtenir sélectivement une liaison fluidique entre le premier réservoir d'air comprimé (10) et le second réservoir d'air comprimé (26) ou une liaison fluidique entre le second réservoir d'air comprimé (26) et les ressorts pneumatiques (16).

6. Dispositif de suspension pneumatique conforme à l'une des revendications précédentes,
**caractérisé en ce que**
le dispositif de commutation (36) est réalisé de façon à permettre d'obtenir sélectivement une liaison fluidique entre le premier réservoir d'air comprimé (10) et le second réservoir d'air comprimé (26), ou une liaison fluidique entre le premier réservoir d'air comprimé (10) et les ressorts pneumatiques (16).
